# EUROPEAN PATENT SPECIFICATION

(11) **EP 3 904 791 B1**
(45) Date of publication and mention of the grant of the patent: **08.01.2025**
(21) Application number: 21000115.2
(22) Date of filing: 26.04.2021
(51) Int. Cl.: F25D 13/04, F25D 25/04, G07F 17/12, A47B 88/457, A47G 29/14, G07F 9/10, G07F 11/16, G07F 17/00, B65G 1/04, B65G 1/137

(54) **AUTOMATED STORAGE AND PICKUP DEVICE FOR FOOD PRODUCTS PURCHASED BY MAIL ORDER VIA THE INTERNET**
AUTOMATISCHE LAGER- UND ABHOLVORRICHTUNG FÜR LEBENSMITTELPRODUKTE, DIE PER E-MAIL ODER ÜBER DAS INTERNET GEKAUFT WERDEN
DISPOSITIF AUTOMATISÉ DE STOCKAGE ET DE RAMASSAGE DE PRODUITS ALIMENTAIRES ACHETÉS PAR CORRESPONDANCE SUR INTERNET

(30) Priority: 27.04.2020 PL 43371220
(43) Date of publication of application: 03.11.2021
(73) Proprietor: Retail Robotics Manufacturing & Services Sp. z o.o., 43-110 Tychy (PL)
(72) Inventor: Nowinski, Lukasz, 43-300 Bielsko-Biala (PL); Gruca, Aleksander, 32-050 Skawina (PL); Dawidczyk, Piotr, 03-161 Warszawa (PL); Kozankiewicz, Julian, 02-705 Warszawa (PL)
(74) Representative: Tabor-Kmiecik, Katarzyna

(56) References cited:
- FR-A1- 3 100 029
- US-A- 2 198 239
- US-A1- 2015 291 357
- US-A1- 2017 036 859
- US-A1- 2020 317 445

## Description

This invention relates to an automated storage and pickup device for food products purchased by mail order via the internet, used in e-retail as an alternative to purchases carried out with delivery of products by courier to a customer's home.

A mail order transaction with delivery and pickup of the ordered food products in a convenient and 24/7 available self-service device requires thermal conditions that eliminate unacceptable bacterial changes in products to maintain their desired sensory and nutritional quality as well as safety for human health. While maintaining packaging separation, food products of different types require specific storage temperatures, and in the period until the customer collects them, these temperatures should be approximately: for fresh vegetables, fruit, milk, eggs and cold meats: +1°C to +8°C; +4°C on average; for frozen meat, poultry, fish and vegetables: -15°C to -25°C; -18°C on average.

Multi-locker cooling and freezing devices are known in which food products ordered online are delivered and placed by courier into lockers assigned to the order by software and in which there is a storage temperature required for a given product or set of products. Once the customer receives an electronic message that the order is complete and the products have been delivered to the selected device, as well as an access code to the locker, the customer collects the ordered products from "their" locker, accessible from the front wall of the device housing. One of such devices, described in the patent document no. EP3336459B1, has lockers individually supplied with liquid refrigerant via heat distribution valves from a central cooling system, with the possibility of setting the cooling temperature in the range from 4°C to 21°C or a freezing temperature in the range from -16°C to -20°C in individual lockers or in a group of lockers. The device operates on similar principles to automated postal item collection points, except that each locker has its own dedicated cooling system to maintain the temperature required for the product stored inside it. This device, like the one described in the patent document no. EP1977176B1, may have lockers inside a space closed with an external door. The possibility of selecting the optimal storage temperature for specific food products makes the device's structure complex and increases the probability of failure.

Development works carried out to improve the logistic efficiency of e-sales in the retail market and to achieve the goal of "ordering and collecting products on the same day", which is very important to the customer, included solutions that supported storage operations with the use of an industrial robot which can operate lockers at heights inaccessible for customers of average height. On the front wall of the device housing, instead of a door to many lockers, there is at least one sending and collecting window for transportation baskets stored by a manipulator on racks. In a state-of-the-art solution, in the patent document no. US20150291357A1, a description is given of a robotic device to pick up perishable food products ordered online. Inside the housing, the device has thermally separated chambers in which different temperatures are maintained. According to the description of the invention's exemplary embodiment, there are two cooling chambers in which the temperature ranges from +1°C to +5°C and from +5°C to +12°C as well as one freezing chamber with a temperature range between -18°C and -35°C. In the chambers, there are racks with storage slots for vertically arranged transportation baskets in which the ordered products are stored. The racks are connected by support columns in a parallel arrangement. A Cartesian manipulator is built in between the racks, consisting of a horizontal rail mounted above the cooling and freezing chambers and a trolley driven along the rail, having a vertically driven platform with transportation basket support plates extending in both perpendicular directions. The chambers are covered from above with thermal insulating covers which are opened by a pin mounted on the bottom surface of the trolley platform. To open the cover, the pin is inserted by means of a manipulator into the opening of the folding lid. On the front wall of the device housing there is a sending and collecting window into which the courier inserts the transportation baskets with the ordered products properly arranged according to the required temperature, which are then picked up and moved on the manipulator platform to the storage chambers and slots indicated by the software. The customer, after receiving information that the delivery is complete and logging into the device via the access code received, activates the manipulator which collects the baskets with the ordered products on the platform and delivers them to the window, enabling them to be picked up from "their" transportation baskets.

The solution with chamber covers, which are usually removed each time from different chambers, significantly slows down customer service, and the combination of the manipulator's operating space with the environment in relatively long periods when the chambers are opened reduces thermal efficiency. Additionally, sending and collecting windows that are open from the outside require continuous supervision due to the possibility of access to the device's internal space by persons with bad intentions, who can damage the device.

In other state-of-the-art solutions - for example, in the patent documents nos. PL224806B2, FR2549942A1, DE1057147B - descriptions are given of multi-locker cooling devices for storing and picking up products purchased online, in which on the side wall of the cooling module housing, above the highest lockers with perforated walls, there is a refrigeration unit which, by means of a fan, initiates a vertical flow of cooled air through the permeable lockers with food products. From the bottom zone, the air is drawn in through a return duct to the evaporator of the refrigeration unit.

Further relevant prior art can be found in US2020/317445A1.

The present disclosure solves the technical problem of developing a simple automated storage and pickup device for food products purchased by mail order through online transactions, wherein an industrial robot and racks of increased height are used for storage operations. An effective cooling system for food products is to be achieved by introducing two temperature ranges in two adjacent modules with a volumetrically, significantly larger cooling module. At the same time, the modules are programmatically integrated by a common courier/customer interface, in a device with high thermal efficiency and customer self-service without the need for constant supervision by a service technician.

***The device according to the present invention*** is defined by appended claim 1.

In the preferable embodiment of the invention, the cooling module in the front and rear racks comprises at least two adjacent transverse sections, each with two vertical support columns of storage slots, and a built-in sending and collecting window at the bottom, symmetrically between the support columns, as well as an interface with a touch screen, QR and/or RFID barcode reader located above, symmetrically between the windows.

Preferably, the transportation basket between the upper edges of the side walls defining its width has support bars that project outwards and have dog teeth at the ends.

The embodiment preferably has centring rails fixed on the drawer side walls and a stop rail on the inner surface of the door, which together determine the position of the transportation basket in the drawer. It is advisable for the embodiment if, when the drawer is ejected, the locking devices of the transportation basket have upper lever clamps mounted on bearings in the rear upper corners of the drawer side walls and controlled by cams fixed to the sluice recess side walls.

If the drawer bottom is fitted with transportation basket support bars and built-in strain gauges to measure the weight of a basket loaded with ordered products, it is possible to additionally check whether the permissible weight of the parcel has been exceeded or whether the customer has left any object inside the basket.

Preferably, the ejection drive is located under the drawer bottom and consists of a two-way gearmotor and tooth gears.

It is possible to check whether an item protrudes beyond the basket by incorporating a retro-reflective photoelectric sensor into the side walls at the door and at the height of the upper edge of the transportation basket.

The movable partition of the sluice recess rear opening preferably is a louvre curtain made of slats articulated along the edges. The curtain is moved by a drive unit in lateral vertical guides fixed along the edge of the sluice recess rear opening. In this embodiment of the present invention, the slats have a circle arc profile and the drive unit is fixed at the upper edge of the sluice recess rear opening and has a gearmotor and a shaft with flexible rollers of a radius equal to the arc of the slat circle. With these rollers, the shaft winds the rear partition from vertical guides to horizontal guides under the upper wall of the sluice recess.

Preferably, the Cartesian frame manipulator used in the device has
- ***a C-shaped trolley frame (17) rotated 90° upwards by its web,***
- ***vertical arms* (18) *by which it is guided on rollers (19) in the inner frame (12) moved horizontally by a toothed belt (13) in the outer frame (11), while the gripping mechanism (G1, G2, G3) has two side arms (20) positioned in parallel at the vertical arms* (18) *of the frame of the trolley (17) and which have the dogs (21)* of *the transport basket* (4) *at their ends and are attached to an extension shaft (22) bearing under the web* of *the frame of the trolley (17) and driven by a two-way* gearmotor *(23)*.**

As an option, it is recommended to use one of the following three gripping mechanism solutions in the device.

In the first one, the side arms consist of a longer element and a shorter element connected by a swing joint. The upper end of the longer element is fixed to the extension shaft, and the shorter element has a dog swing pin at the end. Both elements have chain transmissions coupled with a planetary gear in the swing joint.

In the second embodiment, the gripping mechanism has side arms formed by a deltoid system of longer and shorter lever arms, symmetrical to the plane defined by the axes of both vertical arms of the trolley frame. In the middle position, the system has its longer arms attached with their upper ends to two extension shafts mounted on bearings in parallel under the trolley frame web and driven in opposite directions by a tooth gear of the two-way gearmotor. The lower ends of the longer arms are connected by a tooth gear in a lower cramp with the shorter arms directed upwards. At the upper ends, the shorter arms are mounted on bearings in the dog support which is additionally connected with the lower cramp by a control arm.

The gripping mechanism according to the third embodiment has side arms formed by telescopic, double-sided booms with a rack and pinion drive. It consists of:
- a base element with brackets protruding symmetrically and horizontally in both directions, rigidly connected with the vertical arm of the trolley frame and extending relative to each other on ball circulation guides, and
- a central element driven form the side of the base element by a toothed gear whose gear rack is fixed along the central element and connected with two gears mounted on bearings on shafts symmetrically spaced at both ends of the base element, and
- a dog element driven by a flexible connection drive from the side of the central element, and whose steel cord is wound around two rollers mounted on bearings on the ends of the central element; the steel cord ends are fastened in hooks at both ends of the dog element. Gear shafts of the toothed gear are driven by a transmission with a toothed belt which is wound around a toothed drive wheel mounted at the top on the extension shaft, and below, around two toothed directional wheels mounted on bearings symmetrically with respect to the plane of the axes of both vertical arms of the trolley frame, and around two horizontally spaced toothed reversing wheels mounted on the gear shafts.

Preferably, the air circuit in the cooling module is supplied by two evaporators installed in parallel next to each other on the side wall of the refrigeration unit, the fans of which are connected to the air blow ducts routed above and along the axis of the front and rear racks, and whose bottoms are perforated with holes of diameters increasing with the distance from the fan.

The device according to the invention is distinguished mainly by the design of the sending and collecting window, which creates different access conditions to the drawer space:
- the courier, after releasing the lock with an access code and opening the door, is able to insert a transportation basket with ordered products, remove a basket not picked up by the customer from the drawer, or remove an empty basket, and
the customer, after entering the image or digital code received via SMS into the interface and the automatic drawer ejection with the door closed, gains access to it from above and is able to pick up their ordered products from the basket immobilised with locking devices in the drawer. In addition, when the drawer is ejected, the rear partition is closed, which ensures that the internal space of the cooling module is separated;this eliminates the unfavourable heat exchange with the environment, and prevents the introduction of objects that can damage the manipulator. The device design, i.e. adjusting the number of **sluices** to the number of customers for a given location, allows to shorten the waiting time in periods when the number of customers picking up ordered parcels is increased.

The present invention is explained with a description of the exemplary prototype embodiment shown in the drawing, whose individual figures are as follows:
Fig.1 - perspective front view of the device,
Fig.2 - vertical section through the cooling module according to line A-A,
Fig.3 - perspective top view of the cooling module with the roof removed,
Fig.4 - top view of the transportation basket, Fig.5 - support column with storage slots,
Fig.6 - inside view of the front rack with sending and collecting window,
Fig.7 - perspective view of the racking structure with manipulator arms and air blow ducts,
Fig.8 - front view of the sending and collecting window with the door open,
Fig.9 - side view of the vertical section through the sending and collecting window with the door closed,
Fig.10 - side view of the vertical section through the sending and collecting window with the drawer open,
Fig.11 - perspective top view of the sending and collecting window with the drawer open,
Fig.12 - Cartesian manipulator,
Fig.13 - perspective view of the trolley with the transportation basket caught in the chain gripping mechanism when travelling between the racks,
Fig.14 - perspective view of the trolley with the chain gripping mechanism with elements closed,
Fig.15 - view of the chain gripping mechanism with the arms extended forward,
Fig.16 - cross-section through the open elements of the chain gripping mechanism,
Fig.17 - perspective view of the trolley with the deltoid gripping mechanism with arms closed,
Fig.18 - view of the deltoid gripping mechanism with arms extended forward,
Fig.19 - perspective view of the trolley with the telescopic gripping mechanism with elements slid together,
Fig.20 - perspective view of the trolley with the telescopic gripping mechanism with elements extended forward,
Fig.21 - vertical section through the drive of elements of the telescopic gripping mechanism with elements extended forward,
Fig.22 - front view of the freezing cabinet in the freezing module,
Fig.23 - perspective view of the rack with permeable lockers,
Fig.24 - view of the locker door with the cut-out number
Fig.25 - cross-section of the door

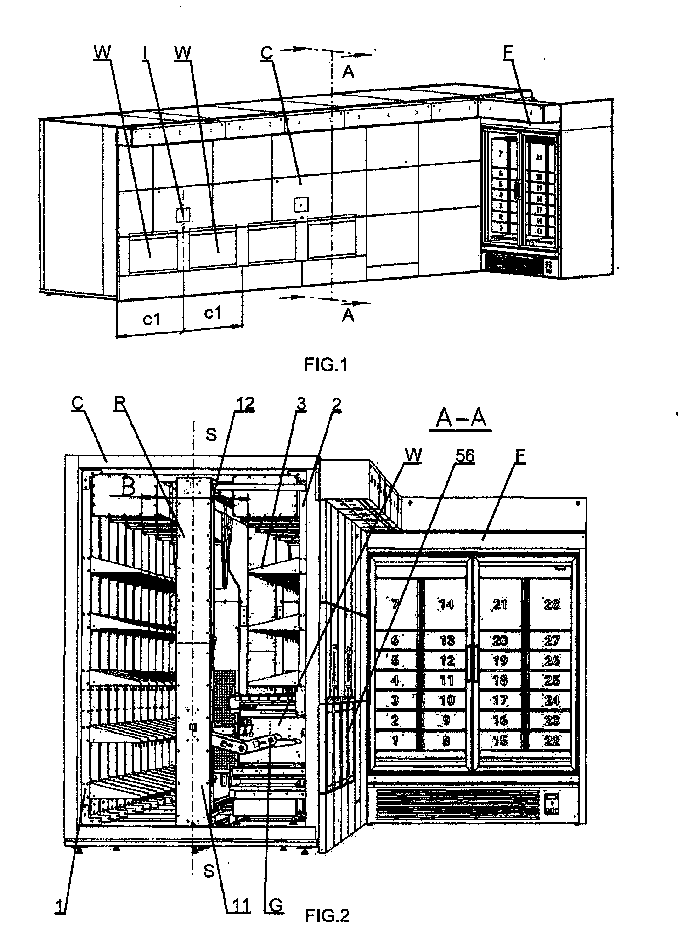

The devices, according to the invention shown in Fig.1, can be installed in supermarkets, general stores and places of everyday human presence: in housing estates, office building zones, car parks, gas stations and similar places. The device comprises two modules: a cooling module C and a freezing module F, whose operation is integrated by software for the management of mail order transactions and which, in terms of device control, records the location of transportation baskets in the device's storage slots and keeps a real-time inventory of their occupancy.

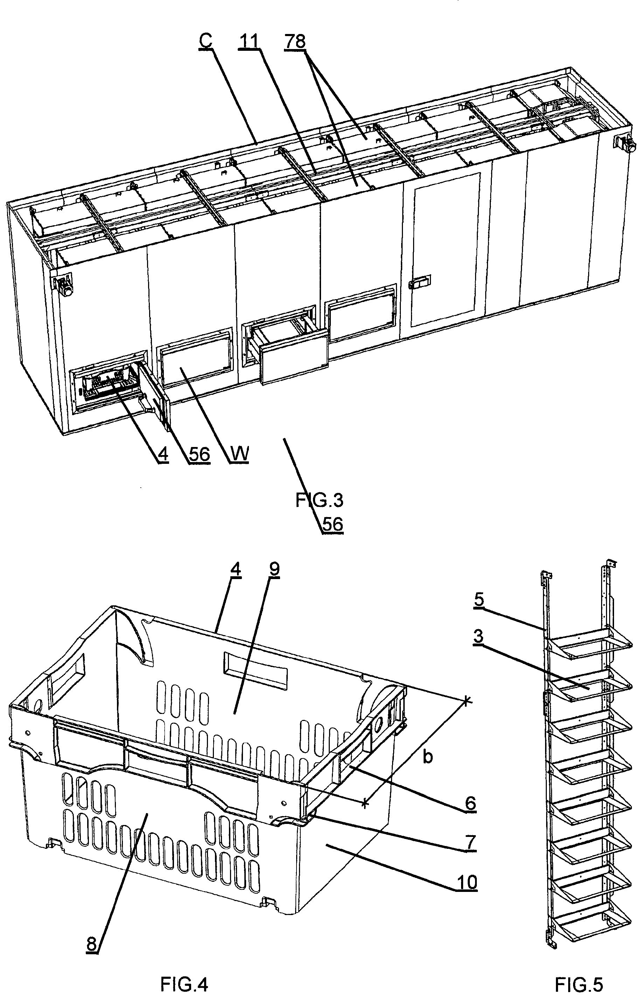

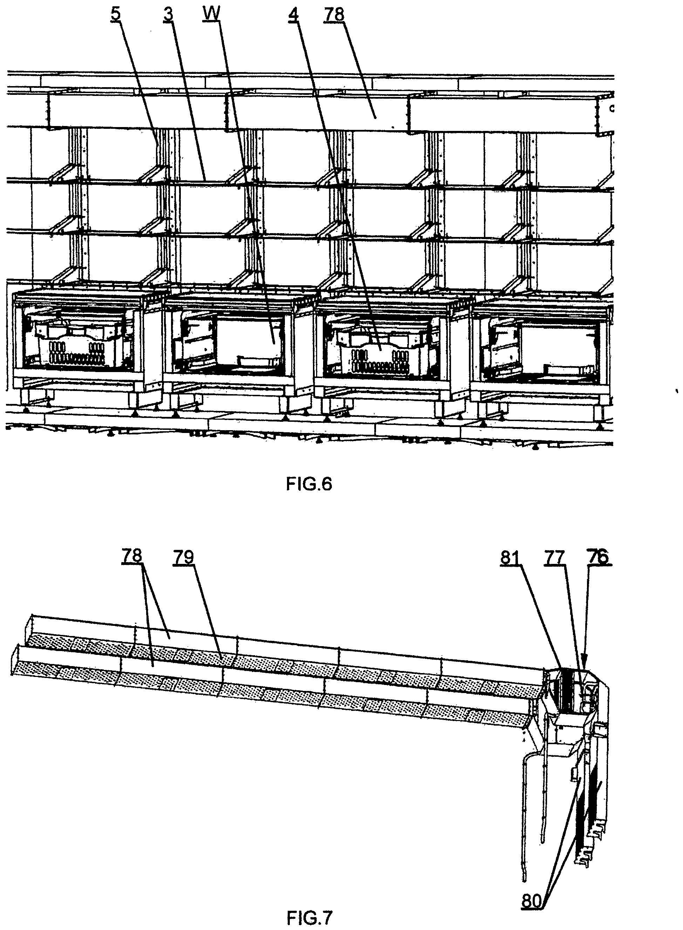

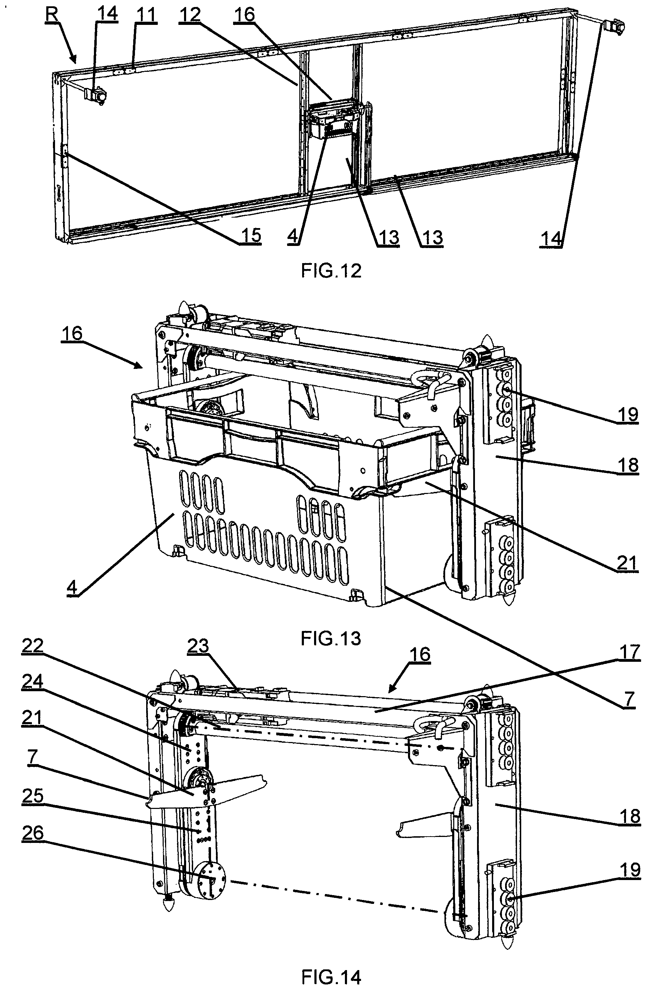

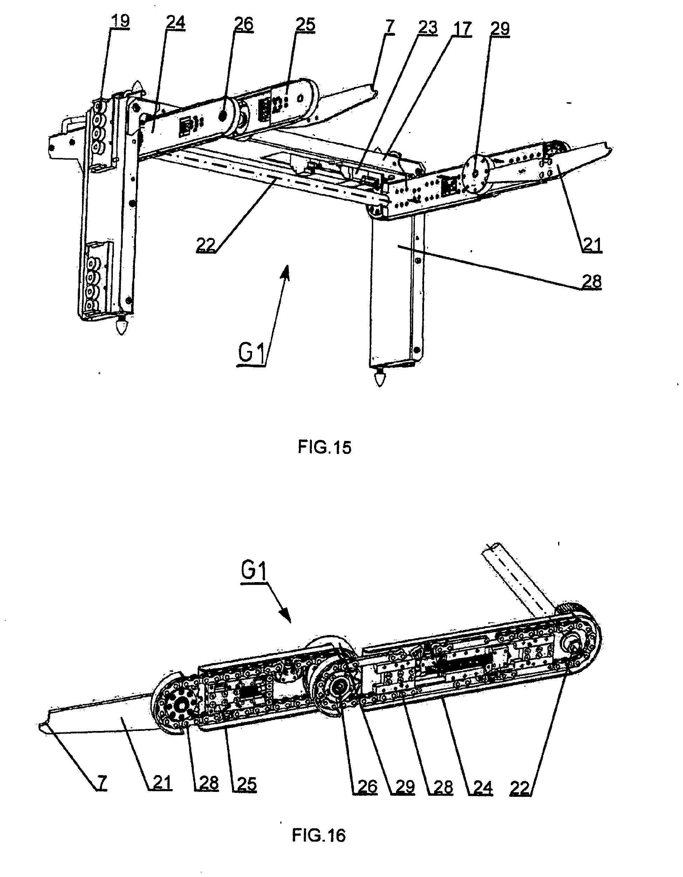

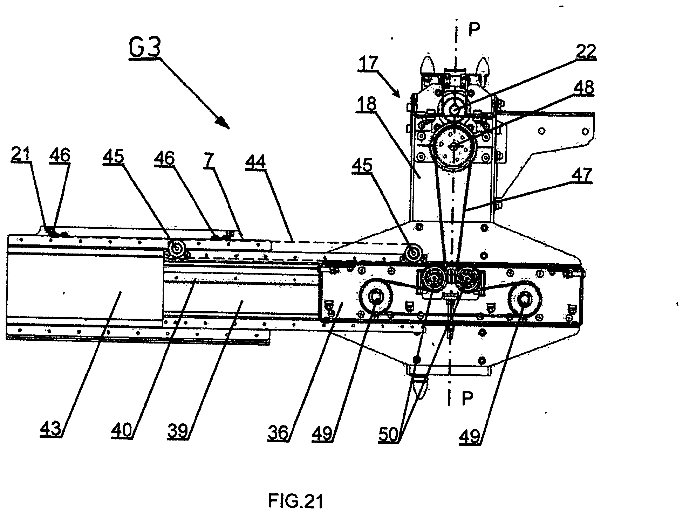

The cooling module **C,** in the form of a rectangular cuboid with walls made of boards thermally insulated with polyurethane foam, has the following approximate dimensions: length - 750 cm to 950 cm, height - 240 cm to 350 cm, and depth - approximately 160 cm. The length of the cooling module **C** depends on the number of sections **c1** used, each of which contains two vertical support columns **5** for storage slots **3** (Fig.2, 3 and 5), a built-in sending and collecting window **W** at the bottom, symmetrically between the support columns **5,** and an interface **I** operating in courier and customer modes, located above, symmetrically between the adjacent windows **W.** The interface **I** has a touch screen and a QR and RFID barcode reader. The cooling module **C** in Fig.1 comprises four sections **c1,** is 950 cm long and has a total of 200 storage slots **3.** Inside the housing of the cooling module **C** there are front **2** and rear **1** racks with cantilever storage slots **3** for transportation baskets **4** whose walls **8, 9, 10** are perforated with holes (Fig.4). The front **2** and rear **1** racks are rigidly connected with support columns **5** (Fig. 6, 7), in an arrangement parallel to the front wall and with spacing **B** = 60 cm (Fig.2) as well as a transportation basket **4** width of **b** = 40 cm. In this embodiment, the transportation basket **4,** with overall dimensions of 60 cm x 40 cm x 30 cm, under the upper edges of the side walls **10** define its width **b,** has support bars **6** that project outwards and have dog teeth **7** (Fig.4) at the ends. In the vertical plane of symmetry **S-S** between the front **2** and rear **1** racks, there is an electrically driven Cartesian frame manipulator **R.** The manipulator **R** has a fixed outer frame **11** and an inner frame **12** which moves horizontally in the outer frame **11** (Fig. 12). In the inner frame **12,** a trolley **16** with a gripping mechanism **G** is vertically guided (Fig.13 to 21). The inner frame **12** and the trolley **16** move in an "H" configuration, are driven through two toothed belts **13** by electric motors **14** mounted in the corners of the outer frame **11** (Fig. 12). The gripping mechanism **G** has forward and backward extending side arms **20** with the dogs **21** of the transportation basket **4** at their ends. The Cartesian manipulator **R** moves transportation baskets **4** according to software-controlled operations: for the courier - between the sending window **W** and the storage slot **3** indicated by the software in the front **2** or rear **1** rack; and for the customer - in the opposite direction, i.e. from the slot **3** with "their" transportation basket **4** to the collecting window **W.**

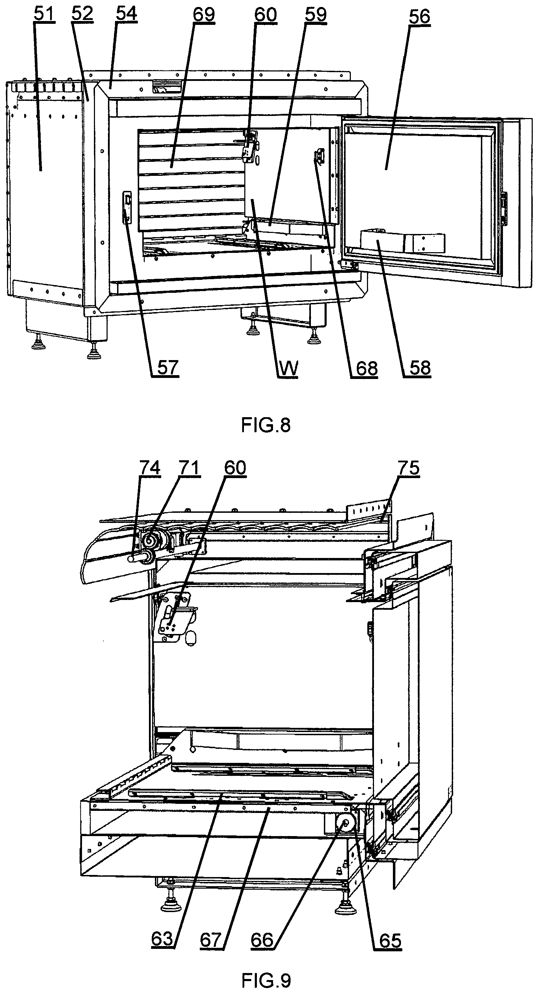

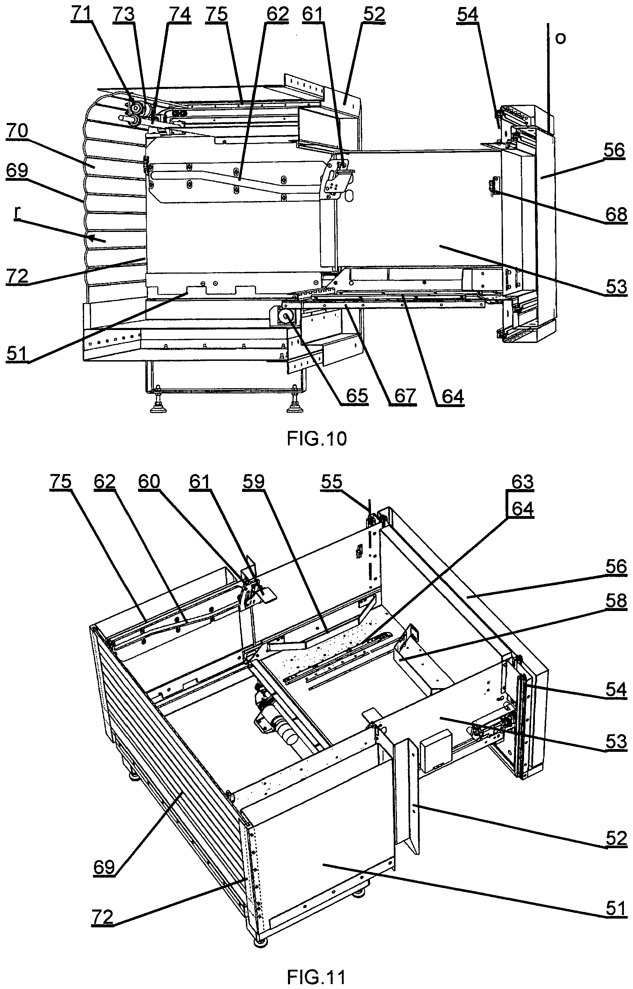

The sending and collecting windows **W** in the cooling module **C** (Fig.8 to 11) have a sluice design with sluice recesses **51** fixed from the inside to the front wall of the cooling module **C,** below the storage slots **3.**In the periods when the sending and collecting window **W**is in contact with the environment, the rear opening of the sluice recess **51** is closed with a movable rear partition **69.ln** the sluice recess **51,** there is a drawer **53** closed at the front by a single-leaf door **56** with a vertical hinge **55** mounted to the front framing **54** of the drawer **53.On** the opposite side, the door **56** is connected to the framing **54** by an electromagnetic lock **57.The** slidable drawer **53** is moved in the sluice recess **51** via a bottom-mounted ejection drive **65** to the open position **o,** and the products in the transportation basket **4** are accessible from above. The ejection drive **65** comprises a gearmotor **66** and tooth gears **67.** On the drawer **53** side walls, there are centring rails **59** and, on the inner surface of the door **56,** there is a stop rail **58,** which together determine the position of the transportation basket **4** in the drawer **53.** When the drawer **53** is ejected to the open position **o,** the transportation basket **4** is blocked by locking devices **60** on the opposite side walls of the drawer **53** and the sluice recess **51.** Locking devices **60** have upper lever clamps **61** mounted on bearings in the rear upper corners of the drawer **53** side walls and controlled by cams **62** fixed to the sluice recess **51** side walls. The transportation basket **4** rests in the drawer **53** on support bars **63** with built-in load strain gauges **64;** a retro-reflective photoelectric sensor **68** is installed in the side walls of the drawer **53,** at the door **56** and at the height of the upper edge of the transportation basket **4.** The movable rear partition **69,** which periodically closes the rear opening of the sluice recess **51,** is a louvre curtain with slats **70** articulated along the edges. Slats **70** have a circle arc profile **r,** and the drive unit **71** is fixed at the upper edge of the sluice recess **51** rear opening and has a gearmotor **73** and a shaft **74** with flexible rollers of a radius requal to the slat **70.**Under pressure from the rollers, the rear partition **69** is moved in the side vertical guides **72** along the edge of the sluice recesses **51** rear opening and in the horizontal guides **75** under the upper wall of the sluice recess **51.**

A trolley **16** in the Cartesian frame manipulator **R** has a C-shaped trolley frame **17** rotated 90° upwards by its web, and vertical arms **18** guide the manipulator **R** on rollers **19** in its inner frame **12** which is horizontally moved by a toothed belt **13** in the outer frame **11** (Fig.12-11). The gripping mechanism **G** has two side arms **20** positioned parallel to the vertical arms **18** of the trolley frame **17** and which have dogs **21** of the transportation basket **4** at their ends.The side arms **20** are attached to the extension shaft **22** mounted on bearings under the web of the trolley frame **17** and driven by a two-way gearmotor **23** (Fig. 14).

The device offers three embodiments of the gripping mechanism. In the first gripping mechanism **G1** (Fig.13 to 16), the side arms **20** consist of a longer element **24** and a shorter element **25** connected by a swing joint **26.The** upper end of the longer element **24** is fixed to the extension shaft **22,** and the shorter element **25** has a dog **21** swing pin **27** at the end.Both elements **24** and **25** have chain transmissions **28** coupled with a planetary gear **29** in the swing joint **26.**

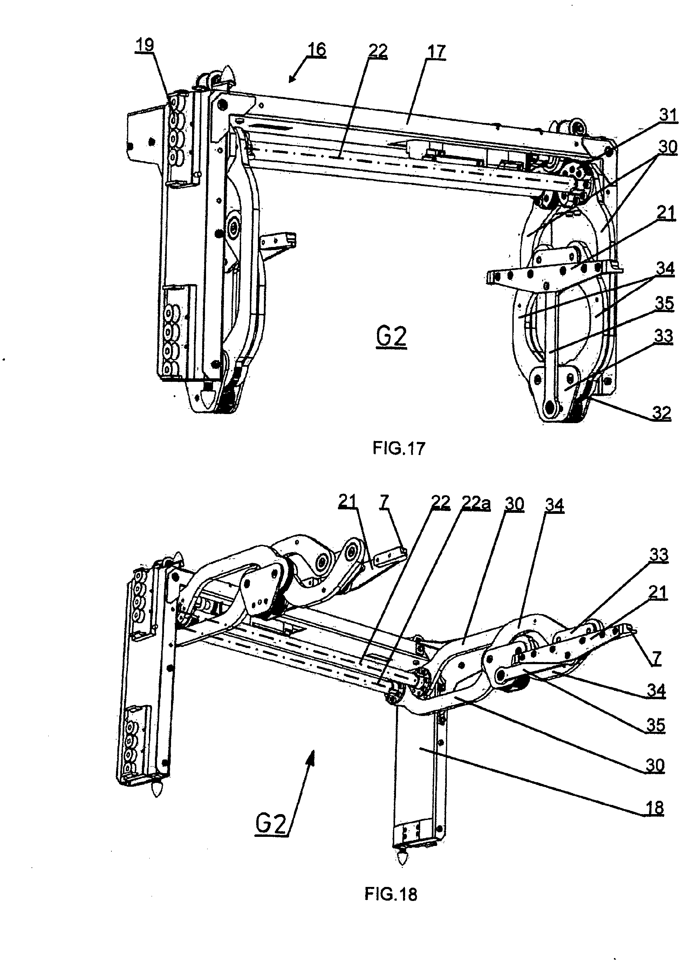

In the second embodiment, the gripping mechanism **G2** (Fig. 17 to 18) has side arms **20** formed by a deltoid system of longer **30** and shorter **34** lever arms, symmetrical to the plane **P-P** defined by the axes of both vertical arms **18** of the trolley frame **17**.In the middle position, the longer arms **30** are attached with their upper ends to two extension shafts **22** and **22a** mounted on bearings in parallel under the trolley frame **17** web and driven in opposite directions by a tooth gear **31** of the two-way gearmotor **23.**The lower ends of the longer arms **30** are connected by a tooth gear **32** in a lower cramp **33** with the shorter arms **34** directed upwards.Their upper ends are mounted on bearings in the dog **21** support, which is additionally connected with the lower cramp **33** by a control arm **35.**

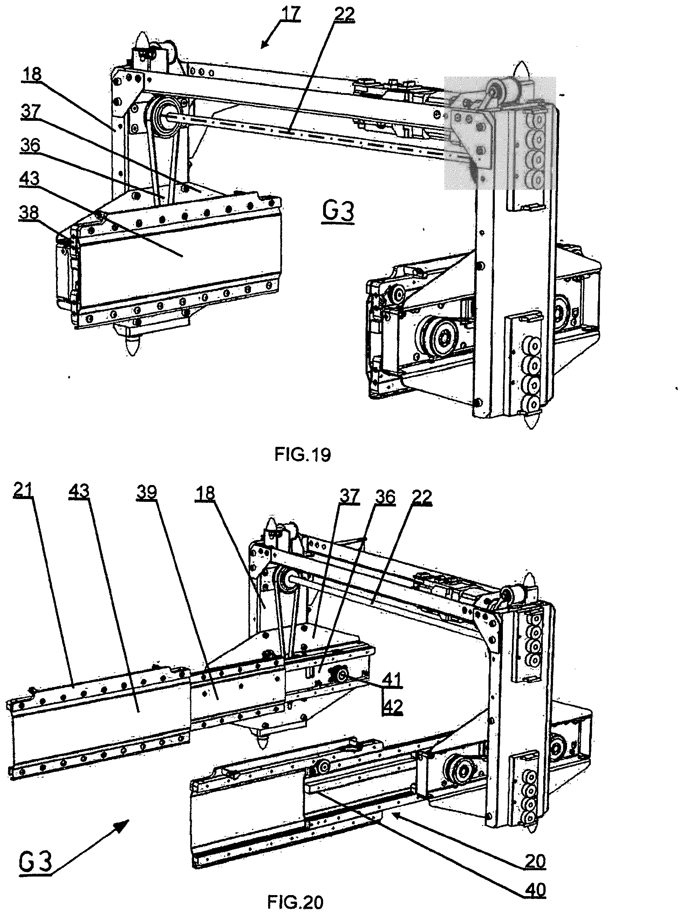

Another, third embodiment of the gripping mechanism **G3** (Fig.19 to 21) has side arms **20** formed by telescopic, double-sided booms with a rack and pinion drive. It is made up of three elements: a base element **36,** a central element **39,** and a dog element **43,** which are slideably connected to each other on ball circulation guides **38.** The base element **36** is rigidly connected with a vertical arm **18** of the trolley frame **17** and has brackets **37** protruding symmetrically and horizontally in both directions.The central element **39** is driven form the side of the base element **36** by a toothed gear **40, 41** whose gear rack **40** is fixed along the central element **39** and connected with two gears **41** mounted on bearings on shafts **42** symmetrically spaced at both ends of the base element **36.**The dog element **43** is driven by a flexible connection drive **44, 45, 46** from the side of the central element **39,** whose steel cord **44** is wound around two rollers **45** mounted on bearings on the ends of the central element **39,** and the steel cord **44** ends are fastened in hooks **46** at both ends of the dog element **43.**Gear **41** shafts **42** of the toothed gear **40, 41** are driven by a transmission with a toothed belt **47** which is wound around a toothed drive wheel **48** mounted on the top and connected with the extension shaft **22.** Below, the toothed belt **47** is wound around two toothed directional wheels **49** mounted on bearings symmetrically with respect to the plane **P-P** and around two horizontally spaced toothed reversing wheels **50** mounted on the gear **41** shafts **42.**

The internal space of the cooling module **C** is circulated with cooling air **P** at a stabilised temperature in the range of 1°C-8°C, optimally 4°C (Fig.2, 3, 7). The cooling air circuit **P** is initiated by a refrigeration unit **76** mounted on the side wall of the cooling module **C** housing and its high-performance fans **77** are connected to air blow ducts **78** routed in the ceiling zone above the rear **1** and front **2** racks. The bottoms of the air blow ducts **78** are perforated with holes of diameters increasing with the distance from the fan. The cool air flows down the transportation baskets **4** to the bottom zone from where it is drawn in through a duct **80** mounted on the side wall, and returns upwards to the inlet of the refrigeration unit **76** evaporator **81.**Evaporators **81** operate with R744 refrigerant, and the condensate is drained through pipes under the body of the cooling module **C.**

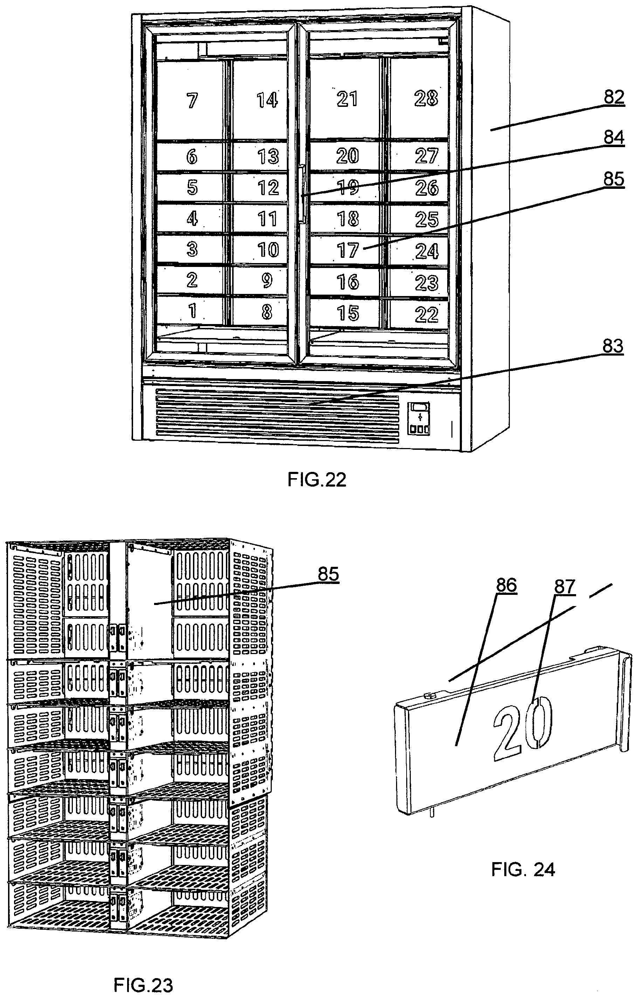

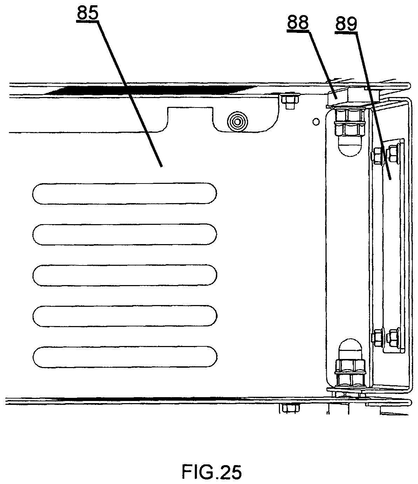

The freezing module **F** (Fig.22 to 25) has a commercially available freezing cabinet **82** whose base is approximately 170 cm x 80 cm, with a height of 200 cm, with a compression-type freezing system **83** that freezes the air to temperatures in the range from -18°C to -22°C as well as with double-leaf glazed doors **84.**lnside the device, there is a rack with a total of 28 lockers **85,** including four upper lockers with increased volume, equipped with electromagnetic locks controlled by an integrated interface **I.** Lockers **85** have perforated walls and their doors **86** have cut-out numbers **87** covered at the back by a polycarbonate plate **89** which diffuses the light of a LED **88** mounted under the upper shelf, which is activated by a signal emitted by the program informing that the ordered products are ready for pickup.

## Claims

1. **Automated storage and pickup device for food products purchased by mail order via the internet,** comprising a cooling module (C) and a freezing module (F) which are programmatically integrated, the cooling module (C) has a rectangular cuboid, thermally insulated housing, at least one sending and collecting window (W), transportation baskets (4) with perforated walls, front (2) and rear (1) racks having cantilever storage slots (3) for the transportation baskets (4), said racks (1,2) are rigidly connected with support columns (5) in an arrangement parallel to the front wall and with spacing (B) greater than the width of the transportation baskets (4); and the cooling module (C) further comprises
- an electrically driven Cartesian frame manipulator (R) in the vertical plane of symmetry (S-S) between the front (2) and rear (1) racks, with a fixed outer frame (11) and an inner frame (12) which moves horizontally in the outer frame (11), a trolley (16) provided in the inner frame with a vertically guided gripping mechanism (G1, G2, G3) whose side arms (20) extend forwards and backwards and have dogs (21) for the transportation baskets (4) at their ends, and the Cartesian manipulator (R) moves transportation baskets (4) according to software-controlled operations between the sending and collecting window (W) and the designated storage slot (3) in the front (2) and rear (1) racks; and the cooling module (C) comprising a refrigeration unit (76) mounted on the side wall of the housing of the cooling module (C), the refrigeration unit (76) including fans (77) and an evaporator (81)
- the internal space of the cooling module (C) is circulated with cooling air (P) at a stabilised temperature in the range between 1°C and 8°C (optimally4°C), produced by the refrigeration unit (76), the fans (77) blow air into the ceiling zone above the racks (1, 2), and the air flows further down the transportation baskets (4) to the bottom zone from where it is drawn in through a duct (80) mounted on the side wall, and returns upwards to the inlet of the evaporator (81);
- the freezing module (F) comprises a freezing cabinet (82) with a compression-type freezing system (83) that freezes the air to temperatures in the range from -18°C to -22°C; double-leaf glazed doors (84), and an embedded rack of lockers (85) with electromagnetic locks controlled by an the- integrated interface (I); wherein
- the sending and collecting window (W) in the cooling module (C) has a design of sluices comprising:
- a sluice recess (51) fixed from the inside to the front wall of the cooling module (C), below the storage slots (3), and whose rear opening is closed with a movable rear partition (69) in the periods when the sending and collecting window (W) is in contact with the environment,
- a drawer (53) which is slidable and is closed at the front by a single-leaf door (56) with a vertical hinge (55) mounted to the front framing (54) of the drawer (53), and, on the opposite side, the door (56) is connected to the framing (54) by an electromagnetic lock (57), and the drawer (53) is moved in the sluice recess (51) via
- a bottom-mounted ejection drive (65) to the open position (o), and the products in the transportation basket (4) are accessible from above, whereby
- when the drawer (53) is ejected to the open position (o), the transportation basket (4) is blocked by locking devices (60) on the opposite side walls of the drawer (53) and the sluice recess (51),
- in the freezing module (F), lockers (85) have walls perforated with holes and the number (87) of the order currently available for pickup is illuminated on the door (86).

2. The automated storage and pickup device as in Claim 1, wherein the cooling module comprises at least two adjacent transverse sections (c1), each with two vertical support columns (5) of storage slots (3), and a built-in sending and collecting window (W) at the bottom, symmetrically between the support columns (5), as well as an interface (I) with a touch screen, QR and/or RFID barcode reader located above, symmetrically between the windows (W).

3. The automated storage and pickup device as in Claim 1, wherein the transportation basket (4) has its width (b) defined under the upper edges of the side walls (10), wherein the transportation basket (4) has support bars (6) that project outwards and have dog teeth (7) at the ends.

4. The automated storage and pickup device as in Claim 1, wherein on the drawer (53) side walls, there are centring rails (59) and, on the inner surface of the door (56), there is a stop rail (58), which together determine the position of the transportation basket (4) in the drawer (53).

5. The automated storage and pickup device as in Claim 1, wherein the locking devices (60) of the transportation basket (4) have upper lever clamps (61) mounted on bearings in the rear upper corners of the drawer (53) side walls when the drawer (53) is ejected to the open position (o), and which are controlled by cams (62) fixed to the sluice recess (51) side walls.

6. The automated storage and pickup device as in Claim 4, wherein at the bottom of the drawer (53), there are support bars (63) of the transportation basket (4) with built-in load strain gauges (64).

7. The automated storage and pickup device as in Claim 1, wherein the ejection drive (65) is installed under the bottom of the drawer (53) and comprises a gearmotor (66) and tooth gears (67).

8. The automated storage and pickup device as in Claim 1, wherein a retro-reflective photoelectric sensor (68) is installed in the side walls of the drawer (53), at the door (56) and at the height of the upper edge of the transportation basket (4).

9. The automated storage and pickup device as in Claim 1, wherein the movable rear partition (69) is a louvre curtain with slats (70) articulated along the edges, and which is moved by a drive unit (71) in lateral vertical guides (72) fixed along the edge of the sluice recess (51) rear opening.

10. The automated storage and pickup device as in Claim 9, wherein the movable rear partition (69) has slats (70) with a circle arc profile (r), and the drive unit (71) is fixed at the upper edge of the sluice recess (51) rear opening and has a gearmotor (73) and a shaft (74) with flexible rollers of a radius equal to the arc (r) of the slat (70) circle, and with these rollers, the shaft (74) winds the rear partition (69) from vertical guides (72) to horizontal guides (75) under the upper wall of the sluice recess (51).

11. The automated storage and pickup device as in Claim 1, wherein the trolley (16) of the Cartesian manipulator (R) has a C-shaped trolley frame (17) rotated 90° upwards by its web, and vertical arms (18) guide the manipulator (R) on rollers (19) in the inner frame (12) which is horizontally moved by a toothed belt (13) in the outer frame (11), whereby the gripping mechanism (G1, G2, G3) has two side arms (20) positioned parallel to the vertical arms (18) of the trolley frame (17) and which have dogs (21) for the transportation basket (4) at their ends and are attached to the extension shaft (22) mounted on bearings under the web of the trolley frame (17) and driven by a two-way gearmotor (23).

12. The automated storage and pickup device as in Claim 11, wherein the side arms (20) comprising a longer element (24) and a shorter element (25) connected by a swing joint (26), and the upper end of the longer element (24) is fixed to the extension shaft (22), and the shorter element (25) has a dog (26) swing pin (27) at the end, whereby both elements (24, 25) have chain transmissions (28) coupled with a planetary gear (29) in the swing joint (26).

13. The automated storage and pickup device as in Claim 11, wherein the side arms (20) are formed by a deltoid system of longer (30) and shorter (34) lever arms, symmetrical to the plane (P-P) defined by the axes of both vertical arms (18) of the trolley frame (17); in the middle position, the side arms (20) have: (17) longer arms (30) attached with their upper ends to two extension shafts (22, 22a) mounted on bearings in parallel under the trolley frame (17) web and driven in opposite directions by a tooth gear (31) of the two-way gearmotor (23), and with their lower ends connected by a tooth gear (32) mounted on bearings in a lower cramp (33) with:
- the shorter arms (34) directed upwards, whose upper ends are mounted on bearings in the dog (21) support which is additionally connected with the lower cramp (33) by a control arm (35).

14. The automated storage and pickup device as in Claim 11, wherein the side arms (20) are formed by telescopic, double-sided booms with a rack and pinion drive, which comprise:
- a base element (36) with brackets (37) protruding symmetrically and horizontally in both directions, rigidly connected with a vertical arm (18) of the trolley frame (17) and extending relative to each other on ball circulation guides (38), and
- a central element (39) driven form the side of the base element (36) by a toothed gear (40, 41) whose gear rack (40) is fixed along the central element (39) and connected with two gears (41) mounted on bearings on shafts (42) symmetrically spaced at both ends of the base element (36), and
- a dog element (43) driven by a flexible connection drive (44, 45, 46) from the side of the central element (39), and whose steel cord (44) is wound around two rollers (45) mounted on bearings on the ends of the central element (39), and the steel cord (44) ends are fastened in hooks (46) at both ends of the dog element (43), whereby
- gear (41) shafts (42) of the toothed gear (40, 41) are driven by a transmission with a toothed belt (47) which is wound around a toothed drive wheel (48) mounted on the top and connected with the extension shaft (22), and below, around two toothed directional wheels (49) mounted on bearings symmetrically with respect to the plane (P-P) and around two horizontally spaced toothed reversing wheels (50) mounted on the gear (41) shafts (42).

15. The automated storage and pickup device as in Claim 1, wherein the air circuit (P) in the cooling module (C) is supplied by two evaporators (81) of the refrigeration unit (76), installed in parallel next to each other on the module side wall, the fans (77) are connected to the air blow ducts (78) routed above and along the axis of the front (2) and rear (1) racks, and whose bottoms (79) are perforated with holes.

16. The automated storage and pickup device as in Claim 15, wherein the diameters of the holes in the perforated bottoms (79) increase with the distance from the fan (77).

## Patentansprüche

1. Automatisierte Lager- und Aufnahmevorrichtung für im Internet-Versandhandel erworbene Lebensmittel, bestehend aus einem Kühlmodul (C) und einem Gefriermodul (F), die programmatisch integriert sind, das Kühlmodul (C) weist ein quaderförmiges, wärmegedämmtes Gehäuse, mindestens ein Sende- und Sammelfenster (W), Transportkörbe (4) mit perforierten Wänden auf, vordere (2) und hintere (1) Regale mit auskragenden Lagerschlitzen (3) für die Transportkörbe (4), wobei die Regale (1,2) starr mit Stützsäulen (5) meiner Anordnung parallel zur Vorderwand und mit einem Abstand (B) größer als die Breite der Transport Körbe (4) verbunden sind; und das Kühlmodul (C) ferner umfaßt
- einen elektrisch angetriebenen kartesischen Rahmenmanipulator (R) in der vertikalen Symmetrieebene (S-S) zwischen den vorderen (2) und hinteren (1) Regalen, mit einem feststehenden Außenrahmen (11) und einem im Außenrahmen (11) horizontal verfahrbaren Innenrahmen (12), einen im Innenrahmen vorgesehenen Wagen (16) mit einem vertikal geführten Greifmechanismus (G1, G2, G3), dessen Seitenarme (20) sich nach vorne und hinten erstrecken und an ihren Enden Mitnehmer (21) für dieTransportkörbe (4) aufweisen, wobei der kartesische Manipulator (R) die Transportkörbe (4) softwaregesteuert zwischen dem Sende- und Sammelfenster (W) und dem vorgesehenen Ablageplatz (3) in den vorderen (2) und hinteren (1) Regalen bewegt; und das Kühlmodul (C) eine Kühleinheit (76) umfasst, die an der Seitenwand des Gehäuses des Kühlmoduls (C) angebracht ist, wobei die Kühleinheit (76) Ventilatoren (77) und einen Verdampfer (81) umfasst
- der Innenraum des Kühlmoduls (C) wird mit Kühlluft (P) bei einer stabilisierten Temperatur im Bereich zwischen 1°C und 8°C (optimal4°C) umgewälzt, wird mit Kühlluft (P) mit einer stabilisierten Temperatur im Bereich zwischen 1 °C und 8 °C (optimal 4 °C) umgewälzt, die von der Kühleinheit (76) erzeugt wird, die Ventilatoren (77) blasen Luft in den Deckenbereich über den Regalen (1, 2), und die Luft strömt weiter nach unten in die Transportkörbe (4) in den unteren Bereich, von wo sie durch einen an der Seitenwand montierten Kanal (80) angesaugt wird und nach oben zum Einlass des Verdampfers (81) zurückkehrt.
- das Gefriermodul (F) umfasst einen Gefrierschrank (82) mit einem Kompressionsgefriersystem (83), das die Luft auf Temperaturen im Bereich von -18°C bis -22°C einfriert; doppelflügelige Glastüren (84) und ein eingebettetes Regal mit Schließfächern (85) mit
elektromagnetischen Schlössern, die durch eine integrierte Schnittstelle (I) gesteuert werden; worin
- das Sende- und Sammelfenster (W) im Kühlmodul (C) hat eine Schleusenkonstruktion, umfassend:
- eine Schleusenaussparung (51), die von innen an der Vorderwand des Kühlmoduls (C) unterhalb der Speicherplätze (3) befestigt ist und deren hintere Öffnung in den Zeiten, in denen das Sende- und Sammelfenster (W) mit der Umgebung in Kontakt ist, mit einer beweglichen hinteren Trennwand (69) verschlossen ist,
- eine Schublade (53), die verschiebbar ist und vorne durch eine einflügelige Tür (56) mit einem vertikalen Scharnier (55) verschlossen ist, das an der vorderen Umrahmung (54) der Schublade (53) angebracht ist, und auf der gegenüberliegenden Seite ist die Tür (56) mit der Umrahmung (54) durch ein elektromagnetisches Schloss (57) verbunden, und die Schublade (53) wird in der Schleusenaussparung (51) über
- einen unten angebrachten Auswurfantrieb (65) in die geöffnete Stellung (o), und die Produkte im Transportkorb (4) sind von oben zugänglich, wobei
- wenn die Schublade (53) in die offene Position (o) geschoben wird, wird der Transportkorb (4) durch Verriegelungsvorrichtungen (60) an den gegenüberliegenden Seitenwänden der Schublade (53) und der Schleusenaussparung (51) blockiert,
- Im Gefriermodul (F) sind die Wände der Fächer (85) mit Löchern versehen, und an der Tür (86) leuchtet die Nummer (87) des gerade zur Abholung bereitstehenden Auftrags.

2. Automatisierte Lager- und Aufnahmevorrichtung nach Anspruch 1, **dadurch gekennzeichnet, dass** das Kühlmodul mindestens zwei benachbarte Querabschnitte (c1), jeweils mit zwei vertikalen Tragsäulen (5) von Lagerplätzen (3), und ein eingebautes Sende- und Sammelfenster (W) an der Unterseite, symmetrisch zwischen den Trägersäulen (5), sowie eine Schnittstelle (I) mit einem Touchscreen, QR- und/oder RFID-Strichcodeleser, die oberhalb, symmetrisch zwischen den Fenstern (W) angeordnet ist.

3. Automatisierte Lager- und Aufnahmevorrichtung nach Anspruch 1, **dadurch gekennzeichnet, dass** der Transportkorb (4) seine Breite (b) unter den Oberkanten der Seitenwände (10) definiert hat, wobei der Transportkorb (4) nach außen ragende Tragstangen (6) aufweist, die an den Enden Mitnehmerzähne (7) aufweisen.

4. Automatisierte Lager- und Aufnahmevorrichtung nach Anspruch 1, **dadurch gekennzeichnet, dass** an den Seitenwänden der Schublade (53)
Zentrierschienen (59) und an der Innenfläche der Tür (56) eine Anschlagschiene (58) vorhanden sind, die zusammen die Position des Transportkorbs (4) in der Schublade bestimmen.

5. Automatisierte Lager- und Aufnahmevorrichtung nach Anspruch 1, **dadurch gekennzeichnet, dass** die Verriegelungseinrichtungen (60) des Transportkorbes (4) obere Hebelklammern (61) aufweisen, die in den hinteren oberen Ecken der Seitenwände der Schublade (53) gelagert sind, wenn die Schublade (53) in die Offenstellung (o) ausgefahren ist, und die durch an den Seitenwänden der Schleusenausnehmung (51) befestigte Nocken (62) gesteuert werden.

6. Automatisierte Lager- und Aufnahmevorrichtung nach Anspruch 4, **dadurch gekennzeichnet, dass** am Boden der Schublade (53) Tragstäbe (63) des Transportkorbes (4) mit eingebauten Lastmessstreifen (64) vorhanden sind.

7. Automatisierte Lager- und Aufnahmevorrichtung nach Anspruch 1, **dadurch gekennzeichnet, dass** der Auswurfantrieb (65) unter dem Boden der Schublade (53) angebracht ist und einen Getriebemotor (66) und Zahnräder (67) umfasst.

8. Automatisierte Lager- und Aufnahmevorrichtung nach Anspruch 1, **dadurch gekennzeichnet, dass** eine Reflexionslichtschranke (68) in den Seitenwänden der Schublade (53), an der Tür (56) und in Höhe der Oberkante des Transportkorbes (4) eingebaut ist.

9. Automatisierte Lager- und Aufnahmevorrichtung nach Anspruch 1, **dadurch gekennzeichnet, dass** die bewegliche hintere Trennwand (69) ein Lamellenvorhang mit Lamellen (70) ist, die entlang der
Antriebseinheit (71) in seitlichen vertikalen Führungen (72) bewegt wird, die entlang des Randes der hinteren Öffnung der Schleusenöffnung (51) befestigt sind.

10. Automatische Lager- und Aufnahmevorrichtung nach Anspruch 9, **dadurch gekennzeichnet, dass** die bewegliche hintere Trennwand (69) Lamellen (70) mit einem Kreisbogenprofil (r) aufweist und die Antriebseinheit (71) an der Oberkante der hinteren Öffnung der Schleusenaussparung (51) befestigt ist und einen Getriebemotor (73) und eine Welle (74) mit flexiblen Walzen mit einem Radius, der dem Bogen (r) des Lamellenkreises (70) entspricht, und mit diesen Walzen wickelt die Welle (74) die hintere Trennwand (69) von vertikalen Führungen (72) zu horizontalen Führungen (75) unter der oberen Wand der Schleusenaussparung (51).

11. Automatisierte Lager- und Aufnahmevorrichtung nach Anspruch 1, **dadurch gekennzeichnet, dass** der Wagen (16) des kartesischen Manipulators (R) einen C-förmigen Wagenrahmen (17) aufweist, der mit seinem Steg um 90° nach oben gedreht ist, und vertikale Arme (18) den Manipulator (R) auf Rollen (19) im inneren Rahmen (12), der durch einen Zahnriemen (13) im äußeren Rahmen (11) horizontal bewegt wird, wobei der Greifmechanismus (G1, G2, G3) zwei Seitenarme (20) aufweist, die parallel zu den vertikalen Armen (18) des Laufwagenrahmens (17) angeordnet sind und an ihren Enden Mitnehmer (21) für den Transportkorb (4) aufweisen und an der unter dem Steg des Laufwagenrahmens (17) gelagerten und von einem Zweiweg-Getriebemotor (23) angetriebenen Verlängerungswelle (22) befestigt sind

12. Automatisierte Lager- und Aufnahmevorrichtung nach Anspruch 11, **dadurch gekennzeichnet, dass** die Seitenarme (20) ein längeres Element (24) und ein kürzeres Element (25) umfassen, die durch ein Drehgelenk (26) verbunden sind, und das längere Element (24) mit seinem oberen Ende an der Verlängerungswelle (22) befestigt ist und das kürzere Element (25) am Ende einen Mitnehmer (26) und einen Schwenkzapfen (27) aufweist, wobei beide Elemente (24, 25) Kettenübertragungen (28) aufweisen, die mit einem Planetengetriebe (29) im Schwenkgelenk (26) gekoppelt sind.

13. Automatisierte Lager- und Aufnahmevorrichtung nach Anspruch 11, **dadurch gekennzeichnet, dass** die Seitenarme (20) durch ein deltaförmiges System längerer (30) und kürzerer (34) Hebelarme gebildet werden, die symmetrisch zu der durch die Achsen der beiden vertikalen Arme (18) des Wagenrahmens (17) definierten Ebene (P-P) angeordnet sind; in der mittleren Stellung weisen die Seitenarme (20) auf:
(17) längere Arme (30), die mit ihren oberen Enden an zwei Verlängerungswellen (22, 22a) befestigt sind, die parallel unter dem Steg des Wagenrahmens (17) gelagert sind und von einem Zahnrad (31) des Zweiwege-Getriebemotors (23) in entgegengesetzter Richtung angetrieben werden, und die mit ihren unteren Enden durch ein Zahnrad (32) verbunden sind, das in einer unteren Klammer (33) gelagert ist:
- die kürzeren, nach oben gerichteten Arme (34), deren obere Enden auf Lagern in der Halterung des Mitnehmers (21) montiert sind, der zusätzlich durch einen Steuerarm (35) mit der unteren Klammer (33) verbunden ist.

14. Automatisierte Lager- und Aufnahmevorrichtung nach Anspruch 11, **dadurch gekennzeichnet, dass** die Seitenarme (20) durch teleskopierbare, doppelseitige Ausleger mit Zahnstange und Ritzel gebildet werden die folgendes umfassen:
- ein Basiselement (36) mit symmetrisch und horizontal in beide Richtungen abstehenden Bügeln (37), die starr mit einem vertikalen Arm (18) des Wagengestells (17) verbunden sind und sich auf Kugelumlaufführungen (38) zueinander erstrecken, und
- ein zentrales Element (39), das von der Seite des Basiselements (36) durch ein Zahnrad (40, 41) angetrieben wird, dessen Zahnstange (40) entlang des zentralen Elements (39) befestigt ist und mit zwei Zahnrädern (41) verbunden ist, die auf Wellen (42) gelagert sind, die symmetrisch an beiden Enden des Basiselements (36) angeordnet sind, und
- ein Mitnehmerelement (43), das von einem flexiblen Verbindungsantrieb (44, 45, 46) von der Seite des Mittelelements (39) aus angetrieben wird und dessen Stahlseil (44) um zwei an den Enden des Mittelelements (39) gelagerte Rollen (45) gewickelt ist, wobei die Enden des Stahlseils (44) an beiden Enden des Mitnehmerelements (43) in Haken (46) befestigt sind, wodurch
- die Zahnradwellen (42) des Zahnradgetriebes (40, 41) werden über ein Getriebe mit einem Zahnriemen (47) angetrieben, der um ein oben montiertes und mit der Verlängerungswelle (22) verbundenes Antriebszahnrad (48) und unten um zwei symmetrisch zur Ebene (P-P) gelagerte Richtzahnräder (49) und um zwei horizontal beabstandete, auf den Zahnradwellen (42) montierte Umlenkzahnräder (50) gewickelt ist.

15. Automatisierte Lager- und Aufnahmevorrichtung nach Anspruch 1, **dadurch gekennzeichnet, dass** der Luftkreislauf (P) im Kühlmodul (C) von zwei Verdampfern (81) der Kühleinheit (76) gespeist wird, die parallel nebeneinander an der Seitenwand des Moduls installiert sind, wobei die Ventilatoren (77) mit den Luftausblaskanälen (78) verbunden sind, die oberhalb und entlang der Achse der vorderen (2) und hinteren (1) Gestelle verlaufen und deren Böden (79) mit Löchern perforiert sind.

16. Automatisierte Lager- und Aufnahmevorrichtung nach Anspruch 15, **dadurch gekennzeichnet, dass** die Durchmesser der Löcher in den perforierten Böden (79) mit dem Abstand zum Lüfter (77) zunehmen.

## Revendications

1. Dispositif automatisé de stockage et de ramassage des produits alimentaires achetés par correspondance via Internet, comprenant un module de refroidissement (C) et un module de congélation (F), qui sont intégrés de manière programmatique, le module de refroidissement (C) a un boîtier cubique rectangulaire, isolé thermiquement, au moins une fenêtre d'envoi et de collecte (W), des paniers de transport (4) avec des parois perforées, des grilles avant (2) et arrière (1) comportant des fentes de stockage en porte-à-faux (3) pour les paniers de transport (4), lesdites grilles (1,2) sont reliées rigidement à des colonnes de support (5) en disposition parallèle à la paroi frontale et avec un espacement (B) supérieur à la largeur des paniers de transport (4) ; et le module de refroidissement (C) comprend en outre
- un manipulateur à cadre cartésien (R) à entraînement électrique dans le plan de symétrie vertical (S-S) entre les grilles avant (2) et arrière (1), avec un cadre extérieur fixe (11) et un cadre intérieur (12) qui se déplace horizontalement dans le cadre extérieur (11), un chariot (16) prévu dans le cadre intérieur avec un mécanisme de préhension guidé verticalement (G1, G2, G3) dont les bras latéraux (20) s'étendent vers l'avant et vers l'arrière et sont munis à leurs extrémités de cliquets (21) pour les paniers de transport (4), et le manipulateur cartésien (R) déplace les paniers de transport (4) selon des opérations contrôlées par logiciel entre la fenêtre d'envoi et de collecte (W) et la fente de stockage désigné (3) des grilles avant (2) et arrière (1) ; et le module de refroidissement (C) comprend une unité de réfrigération (76) monté sur la paroi latérale du boîtier du module de refroidissement (C), l'unité de réfrigération (76) comprenant des ventilateurs (77) et un évaporateur (81)
- l'espace intérieur du module de refroidissement (C) circule avec de l'air de refroidissement (P) à une température stabilisée comprise entre 1 et 8 °C (de préférence 4 °C), produit par l'unité de réfrigération (76), les ventilateurs (77) soufflent de l'air dans la zone du plafond au-dessus des grilles (1, 2), et l'air
descend le long des paniers de transport (4) jusqu'à la zone inférieure, d'où il est aspiré par un conduit (80) monté sur la paroi latérale, et retourne vers le haut à l'entrée de l'évaporateur (81) ;
- le module de congélation (F) comprend une armoire de congélation (82) dotée d'un système de congélation par compression (83) qui congèle l'air à des températures comprises entre -18 °C et -22 °C ; des portes vitrées à double battant (84) et une étagère intégrée de casiers (85) avec des serrures électromagnétiques contrôlées par une interface intégrée (1) ; où
- la fenêtre d'envoi et de collecte du module de refroidissement (C) a une conception d'écluses comprenant :
- une niche de l'écluse (51) fixée de l'intérieur à la paroi avant du module de refroidissement (C), sous les fentes de stockage (3), et dont l'ouverture arrière est fermée par une cloison arrière mobile (69) pendant les périodes où la fenêtre d'envoi et de collecte (W) est en contact avec l'environnement,
- un tiroir (53) coulissant et fermé à l'avant par une porte à un vantail (56) avec une charnière verticale (55) montée sur le cadre avant (54) du tiroir (53), et, du côté opposé, la porte (56) est reliée au cadre (54) par une serrure électromagnétique (57), et le tiroir (53) est déplacé dans la niche de l'écluse (51) par l'intermédiaire de
- moteur d'éjection (65) monté en bas en position ouverte (o), et les produits dans le panier de transport (4) sont accessibles par le haut, de sorte que
- lorsque le tiroir (53) est éjecté en position ouverte (o), le panier de transport (4) est bloqué par les dispositifs de verrouillage (60) sur les 50 parois latérales opposées du tiroir (53) et de la niche de l'écluse (51),
- dans le module de congélation (F), les casiers (85) ont des parois percées de trous et le numéro (87) de la commande en cours de préparation est éclairé sur la porte (86).

2. Le dispositif automatisé de stockage et de ramassage selon la Revendication 1, dans lequel le module de refroidissement contient au moins deux sections transversales adjacentes, chacune avec deux colonnes verticales de support (5) de la fente de stockage (3) et une fenêtre intégrée d'envoi et de collecte (W) en bas, symétriquement entre les colonnes de support (5), ainsi qu'une interface (1) avec un écran tactile, lecteur de code-barres QR et/ou RFID situé au-dessus, symétriquement entre les fenêtres (W).

3. Le dispositif de stockage et de ramassage automatisé selon la Revendication 1, dans lequel le panier de transport (4) a sa largeur (b) définie en dessous des bords supérieurs des parois latérales (10) où le panier de transport (4) a les barres de support (6), qui font saillie vers l'extérieur et ont des dents de cliquets (7) à leurs extrémités.

4. Le dispositif de stockage et de ramassage automatisé selon la Revendication 1, dans lequel les parois latérales du tiroir (53) comportent des rails de centrage (59) et la surface intérieure de la porte (56) comporte un rail de butée (58) qui, ensemble, déterminent la position du panier de transport (4) dans le tiroir (53).

5. Le dispositif de stockage et de ramassage automatisé selon la Revendication 1, dans lequel les dispositifs de verrouillage (60) du panier de transport (4) comportent des pinces à levier supérieures (61) montées sur des roulements dans les coins supérieurs arrière des parois latérales du tiroir (53) lorsque le tiroir (53) est éjecté en position ouverte (o), et qui sont commandées par des cames (62) fixées sur les parois latérales de la niche d'écluse (51).

6. Le dispositif de stockage et de ramassage automatisé selon la Revendication 4, dans lequel le fond du tiroir (53) comporte des barres de support (63) du panier de transport (4) avec des jauges de contrainte de charge intégrées (64).

7. Le dispositif de stockage et de ramassage automatisé selon la Revendication 1, dans lequel le moteur d'éjection (65) est installé sous le fond du tiroir (53) et comprend un motoréducteur (66) et des engrenages dentés (67).

8. Le dispositif de stockage et de ramassage automatisé selon la Revendication 1, dans lequel un capteur photoélectrique rétroréfléchissant (68) est installé sur les parois latérales du tiroir (53), au niveau de la porte (56) et à la hauteur du bord supérieur du panier de transport (4).

9. Le dispositif de stockage et de ramassage automatisé selon la Revendication 1, dans lequel la cloison arrière mobile (69) est un rideau à lamelles (70) articulé le long des bords, et qui est déplacé par une unité d'entraînement (71) dans des guides verticaux latéraux (72) fixés le long du bord de l'ouverture arrière de la niche d'écluse (51).

10. Le dispositif de stockage et de ramassage automatisé selon la Revendication 9, dans lequel la cloison arrière mobile (69) comporte des lamelles (70) avec un profil en arc de cercle (r), et l'unité d'entraînement (71) est fixée au bord supérieur de la niche d'écluse (51) et comporte un motoréducteur (73) et un arbre (74) avec des rouleaux flexibles d'un rayon égal à l'arc (r) du cercle de la lamelle (70), et avec ces rouleaux, l'arbre (74) enroule la cloison arrière (69) des guides verticaux (72) aux guides horizontaux (75) sous la paroi supérieure de la niche d'écluse (51).

11. Le dispositif de stockage et de ramassage automatisé selon la Revendication 1, dans lequel le chariot (16) du manipulateur cartésien
(R) est doté d'un châssis du chariot en forme de C (17) tourné à 90 ° vers le haut par son axe, et des bras verticaux (18) guident le manipulateur (R) sur des rouleaux (19) dans le cadre intérieur (12) qui est déplacé horizontalement par une courroie dentée (13) dans le cadre extérieur (11), le mécanisme de préhension (G1, G2, G3) ayant deux bras latéraux (20) positionnés parallèlement aux bras verticaux (18) du châssis du chariot (17), qui ont à leurs extrémités des cliquets (21) pour le panier de transport (4) et sont fixés à l'arbre d'extension (22) monté sur des roulements sous l'axe du châssis du chariot (17) et entraîné par un motoréducteur bidirectionnel (23).

12. Le dispositif de stockage et de ramassage automatisé selon la Revendication 1, dans lequel les bras latéraux (20) comprennent un élément plus long (24) et un élément plus court (25), reliés par un joint tournant (26), et l'extrémité supérieure de l'élément plus long (24) est fixée à l'arbre d'extension (22), et l'élément plus court (25) est doté d'un axe de pivotement (27) du cliquet (26) à l'extrémité, les deux éléments (24, 25) ayant des transmissions par chaîne (28), couplées à un engrenage planétaire (29) dans le joint tournant (26).

13. Le dispositif de stockage et de ramassage automatisé selon la Revendication 11, dans lequel les bras latéraux (20) sont formés par un système deltoïde de bras de levier plus longs (30) et plus courts (34), symétriques par rapport au plan (P-P) défini par les axes des deux bras verticaux (18) du châssis du chariot (17) ; en position médiane, les bras latéraux (20) ont :
(17) les bras plus longs (30) fixés par leurs extrémités supérieures à deux arbres d'extension (22, 22a) montés parallèlement sur des roulements sous l'axe du châssis du chariot (17) et entraînés en sens inverse par une roue dentée (31) du motoréducteur bidirectionnel (23), et dont les extrémités inférieures sont reliées par une roue dentée (32) montée sur des roulements dans un crampon inférieur (33) avec :
- les bras plus courts (34) orientés vers le haut, dont les extrémités supérieures sont montées sur des roulements dans le support du cliquet (21) qui est en outre relié au crampon inférieur (33) par un bras de commande (35).

14. Le dispositif de stockage et de ramassage automatisé selon la revendication 11, dans lequel les bras latéraux (20) sont formés par des flèches télescopiques à double face avec une grille et un entraînement du pignon, qui comprennent :
- un élément de base (36) avec des supports (37) faisant saillie symétriquement et horizontalement dans les deux sens, reliés de manière rigide à un bras vertical (18) du châssis du chariot (17) et s'étendant l'un par rapport à l'autre sur des guides de circulation de billes (38), et
- un élément central (39) entraîné sur le côté de l'élément de base (36) par un engrenage denté (40, 41) dont la grille d'engrenage (40) est fixée le long de l'élément central (39) et reliée à deux engrenages (41) montés sur des roulements sur des arbres (42) symétriquement espacés aux deux extrémités de l'élément de base (36), et
- un élément de cliquet (43) entraîné par un système de connexion flexible (44, 45, 46) depuis le côté de l'élément central (39), et dont le câble d'acier (44) est enroulé autour de deux rouleaux (45) montés sur des roulements aux extrémités de l'élément central (39), et les extrémités du câble d'acier (44) sont fixées dans des crochets (46) aux deux extrémités de l'élément de cliquet (43), de manière que
- les arbres (42) à engrenages (41) de l'engrenage denté (40, 41) sont entraînés par une transmission à courroie crantée (47) qui s'enroule autour d'une roue d'entraînement dentée (48) montée en haut et reliée à l'arbre d'extension (22), et en bas, autour de deux roues directionnelles dentées (49) montées sur des roulements symétriques par rapport au plan (P-P) et autour de deux roues d'inversion dentées (50) espacées horizontalement et montées sur les arbres (42) à engrenages (41).

15. Le dispositif de stockage et de ramassage automatisé selon la Revendication 1, dans lequel le circuit d'air (P) du module de refroidissement (C) est alimenté par deux évaporateurs (81) de l'unité de réfrigération (76), installés parallèlement l'un à côté de l'autre sur la paroi latérale du module, les ventilateurs sont reliés aux conduits de soufflage d'air (78) acheminés au-dessus et le long de l'axe des grilles avant (2) et arrière (1), et dont les fonds (79) sont percés de trous.

16. Le dispositif de stockage et de ramassage automatisé selon la Revendication 15, dans lequel les diamètres des trous dans les fonds perforés (79) augmentent avec la distance du ventilateur (77).
